# EUROPEAN PATENT APPLICATION

(11) **EP 1 216 976 A2**
(43) Date of publication of application: **26.06.2002**
(21) Application number: 01130133.0
(22) Date of filing: 19.12.2001
(51) Int. Cl.: C05F 11/02

(54) **Method to isolate water-soluble humic molecules and to obtain complexes thereof with chemical fertilizing elements**

(30) Priority: 21.12.2000 IT UD000225
(71) Applicant: Universita' Degli Studi di Udine, 33100 Udine (IT)
(72) Inventor: Cesco, Stefano, 33031 Basiliano (UD) (IT); Varanini, Zeno, 33047 Remanzacco (UD) (IT); Pinton, Roberto, 33100 Udine (IT)
(74) Representative: Petraz, Gilberto Luigi

(57) **Abstract**

Method to isolate water-soluble humic molecules and to obtain complexes thereof with chemical fertilizing elements, comprising the steps of: extraction of the humic fraction from a sub-stratum immersed in water; removal of the insoluble component to obtain the humic fraction alone; purification and concentration of the humic fraction by passing the aqueous extract through a column of resin; elution of the humic molecules from the column of resin; correction of the pH to a value near neutral; preparation of the complex of the humic molecule and chemical fertilizing elements. The water in which the sub-stratum rich in organic substance is immersed is non-alkalized water and the resin used for the purification and concentration of the aqueous extract is PVPP resin in acid form (Polyvinylpolypyrrolidone).

## Description

### FIELD OF THE INVENTION

The invention refers to a method to isolate a fraction of water-soluble humified organic substance (SHOS) able to form complexes with iron and other chemical fertilizing elements, metal and non-metal, meso- and micro-nutrients.

The invention is applied in the field of botany and vegetable production, in order to supply crops with a natural-type nutriment which will have both the ability to deliver iron in a more readily available form for the plants compared with synthetic products used at present, and also the property of stimulating the absorption of the nutrients by the roots in order to encourage a greater growth of the plants.

### BACKGROUND OF THE INVENTION

It is well-known that one of the main causes of limited plant-growth and the consequent reduction in crop-productivity is the lack of chemical fertilizing elements (nutrients) in the sub-strata where the plants grow.

It is particularly important, due to the frequency of the phenomenon and to its considerable effect on the production capacity and the quality of the crops, when there is a lack of iron. In fact, although this nutrient is among the main constituents of the solid portion of the soil, its forms available for the plants are often below the minimum threshold required for an adequate growth thereof.

For this reason, during the course of the cultivation cycle, it is very often necessary to intervene with auxiliary fertilizers which contain iron, in order to remedy the nutritional deficiencies of the plants and to safeguard the productivity of the crop.

For this type of agricultural practice, the main iron compounds available on the market are chelates; however, these synthetic compounds, characterized by a highly stable link between the nutrient and the chelate agent (for example FeEDDHA), have the disadvantage that they are not retained by the solid part of the soil and can be subject to leaching which is sometimes higher than 98% of the amount distributed. Similar behavior may be found for other chemical fertilizing elements.

For those working in this field, therefore, there is an urgent need to be able to isolate a natural molecule able to form complexes with iron and other metals with a high nutritional capacity.

The document "*Solubilization of iron by water-extractable humic substances",* published in the JOURNAL OF PLANT NUTRITION AND SOIL SCIENCE, vol. 163, n°. 3, 2000, pages 285-290, and other works published by the same authors (for example *"Water-extractable humic substances enhance iron deficiency responses by Fe-deficient cucumber plants"* Plant and soil (1999), (201)2, 145-157) describe a laboratory method to extract humic molecules and to use them to form ferrous complexes which can be employed as a nutrient for plants and vegetables in general.

However, these documents do not teach a method which can be directly transferred to practical applications and cultivations in the field. In fact, these documents provide to use soda both to elute the humic substances from the column of Amberlite XAD-8 resin in which the solution of substances has been loaded, and also to take the pH of the solution itself to neutral.

However, it is well-known that, although soda is valid in laboratory tests and experiments, it is a dangerous compound in working phases, highly toxic for leaf treatments and cannot be used extensively for cultivations in the field, since its presence and diffusion would cause considerable damage to the cultivated ground and huge environmental pollution.

Furthermore, the use of Amberlite XAD resin entails considerable technological problems in application which, moreover, prejudice any possibility of regeneration.

What is more, this document provides to add distilled water to the sub-stratum rich in organic material, but the use of distilled water is not compatible with an extensive application in the field of said technique to extract humic molecules. Moreover, distilled water, apart from entailing high production costs, also entails, due to its high level of purity, the co-extraction, together with the humic compounds, of contaminating ions, the removal of which would entail further energy costs.

The present Applicant has devised and embodied this invention to meet this need to obtain nutritional composts which can be used directly in the cultivated ground for applications in the field, without negative consequences on the environment and on the fertility of the fields over time, and without technological, practical and economic problems in application, and also to obtain further advantages.

### SUMMARY OF THE INVENTION

The invention is set forth and characterized in the main claim, while the dependent claims describe other innovative characteristics of the invention.

The purpose of the invention is to perfect a method which will allow to isolate a fraction of water-soluble humified organic substance (SHOS) able to form complexes with iron and other chemical fertilizing elements, metal and non-metal, meso- and micro-nutrients.

Another purpose is to obtain an organic fraction which can be used directly in cultivated grounds for extensive applications in the field without risks of pollution and an increase in the toxicity of the ground itself.

A further purpose is to allow to re-use in the agricultural sector the exhausted sub-stratum and the sediment of the centrifugation after the soluble humic molecules have been isolated, and also, after the soluble humic fraction has been extracted, to re-use the water in new extraction cycles.

The isolated fraction can be used to form a nutritional complex more readily available for the plants, compared with synthetic compounds used at present, such as FeEDTA or Fe-Citrate, also when there are particular situations, such as for example a pH of 7.5 or in the presence of CaCO₃, which are often associated with a marked lack of availability of the micronutrient for the plants.

Moreover, this isolated fraction is able, by itself, to modulate the bio-chemical mechanisms involved in the mineral nutrition of the plants, stimulating the absorption of the nutrients by the roots and encouraging a greater growth of the plants.

In accordance with this purpose, the method to isolate a humified organic fraction according to the invention provides the following steps:
- the water-soluble humic fraction is extracted from a sub-stratum rich in organic substance immersed in water;
- the insoluble component is removed from the resultant suspension to obtain the soluble humic fraction alone;
- the humic fraction is purified and concentrated by passing the aqueous extract through a column of resin, to obtain the separation of the humified component alone of the water-soluble organic compounds;
- excess metals such as Na, K, Cd, Pb, etc. are removed;
- the pH is corrected to a value near neutral.

According to one characteristic of the invention, the water used to immerse the organic sub-stratum is non-alkalized water, while the resin used to separate the humified component is PVPP resin (Polyvinylpolypyrrolidone).

The use of non-alkalized water rather than distilled and de-mineralized water, as already used in methods known to the state of the art, brings advantages both in economic terms and practical terms, due to the easy availability of this material. Unlike de-mineralized water, moreover, non-alkalized and not de-mineralized water does not encourage the solubilization of contaminating ions, which would need to be removed from the humic compounds obtained.

The pH value of the water used in the first extraction cycle is advantageously comprised between about 6.0 and about 7.8, according to the characteristics of the water available for the plant. In the steps following the first extraction cycle, the water used for the subsequent extraction cycles will be characterized by pH values near to 2, obtained by adding concentrated H₃PO₄.

The use of PVPP resin instead of Amberlite XAD resin brings considerable advantages of a practical and technological nature.

To be more exact, the use of this resin is motivated by its specific ability, in an acid environment, to adsorb compounds of a phenolic nature, such as humic molecules, and also its complete regenerability, which allows it to be re-used in the subsequent cycles without producing waste.

Moreover, this resin can be used both in discontinuous and continuous systems.

It should be considered that the PVPP resin is a resin which is widely used in the industrial stabilization of drinks in the food industry, but its extensive use in the botanical field, in vegetable production by the extraction of humic molecules, and in the field of fertilizers, has never been applied.

According to another characteristic of the invention, the elution of the humic molecules adsorbed, and the correction of the pH of the eluate are obtained by adding KOH.

The use of KOH rather than NaOH, in extensive applications in the field, prevents the possible contamination of the cultivated ground by toxic and polluting substances in large quantities, such as sodium, while it allows to deliver macronutrient potassium, which has a considerable importance in the growth of vegetable species.

According to a variant, at the end of the isolation process of the humic fraction, the extract is subjected to freezing and lyophilization.

The humic fraction thus obtained can be preserved even for prolonged periods and can then be used to prepare complexes with iron or other metals or chemical fertilizing elements (nutrients in general).

### EXAMPLE

A preferential example of preparing the water-soluble humified organic fraction (SHOS) provides to prepare a sub-stratum rich in organic substance (peat, compost, earth mold, peaty soil, etc., either as a single sub-stratum or as a mixture of several sub-strata) and to keep the sub-stratum stirred in non-alkalized water for a time of between 10 and 20 hours, according to the type of sub-stratum.

The quantity ratio in weight between the sub-stratum and water is about 1:20.

The sub-stratum can possibly be ground (Ø < 2 mm), to increase the active surface, and heated water can be used: this can allow a considerable increase in the productivity of the method and/or a reduction in the time required for extraction.

After the sub-stratum has been immersed in water for the required time, the insoluble component is removed by means of filtration with a suitable means, without applying a vacuum, and subsequently centrifuged at 2000 g for 30 minutes.

The sediment, consisting of water insoluble residues such as humic acid, humin, inorganic residues, etc., is removed, while the part rising to the surface is collected and subjected to a further filtration at 0.2 µm using a packing filter. According to a variant, a tangential filter is used.

The treatment to which the various sub-strata are subjected reduces their content of organic substance, however it does not greatly alter their chemical composition and does not prevent them from being used again in agricultural processes. In fact, the exhausted sub-stratum and the sediment upon centrifugation, after the excess water has been properly removed, can be used to prepare sub-strata for sowing and growing plants in pots.

The filtration at 0.2 µm ensures that only the soluble humic fraction is present in the filtered solution. According to the type of application, it is possible, however, to omit this filtration.

The filtrate obtained is acidified (pH 1÷2) by adding concentrated H₃PO₄, and then subjected to the subsequent steps of concentration and purification of the humic fraction extracted.

These last steps are actuated by passing the acid aqueous extract through a column of PVPP resin in acid form (Polyvinylpolypyrrolidone).

The resin is characterized by a specific adsorption, in an acid environment, of the compounds of a phenolic nature; it is precisely because of the polyphenolic nature of the humified component of the organic substance that the purification by means of PVPP resin allows to separate only the humified component of the water-soluble organic compounds from the other components in the solution.

At the same time as the humified organic fraction is selectively adsorbed on resin, the non-alkalized water used to extract the fraction is completely removed; this solution can thus be re-used in new extraction processes.

When the sample has finished being loaded, the column is washed with a solution of H₃PO₄ 0.1N, in order to ensure that all the components present in the free spaces of the column and not adsorbed by the resins have been eliminated. The humic molecules adsorbed are then eluted from the column by passing KOH 0.1N.

Introducing KOH into the column causes an alkalinization of the environment (pH 12÷13), and causes the PVPP resin to lose its ability to adsorb the compounds of phenolic nature.

At the end of this step, a concentrated preparation of humified organic fraction is obtained, with a final volume of less than 1% of the volume of water used to extract the organic fraction from the original sub-stratum.

Then the eluate is treated with Amberlite IR120 resin in acid form until the solution reaches pH values near 2; this treatment, on the one hand, allows to remove the excess K due to the elution of the molecules from the column with KOH, and on the other hand allows a considerable reduction in the endogenous contents of metals naturally adsorbed, complexed and/or chelated in the humic fraction (for example heavy toxic metals such as Cd, Pb, etc.).

It is not indispensable to treat the extract with resin in acid form in order to complete the isolation process.

After this treatment, the pH of the eluate is corrected and taken to values near neutral by adding small quantities of KOH, then frozen and, according to a variant, lyophilized.

Other variants of the method may provide concentration procedures, by rapid evaporation, for example the spray dry technique, which do not alter the characteristics of the invention and therefore do not prevent it from being used. The isolated humic fraction (SHOS) thus obtained can be preserved at ambient temperature even for prolonged periods. For some commercial applications it may be provided to use the fraction not subjected to concentration (salification).

The analysis of the elements present in greatest quantity (C, H, N and O) made on the SHOS fraction suggests that the fraction mainly consists of fulvene acids; determining the percentage distribution of the molecular weights shows that more than 50% of the molecules in the fraction have a molecular weight of less than 1 kD.

An important feature of the method proposed here is that the sub-products of the extraction of the SHOS fraction can be re-used in the production cycle of the fraction or in agricultural processes.

The preparation of the complex of the SHOS fraction and iron, or alternately with other metals and nutrients in general, provides firstly to dissolve the SHOS fraction in water to a final concentration of 2g L⁻¹ organic C (or alternately even more concentrated) and subsequently to put the solution containing the SHOS in contact with the Amberlite IR120 resin, pre-treated with iron, or alternately with other nutrients, in a ratio of 1 ml of solution for 1 ml of resin.

This method allows a stechiometric exchange of the metal between the resin and the SHOS fraction. After 3 hours of contact, the solution is separated from the resin by filtration on a suitable means without applying a vacuum; the solution containing the Fe-SHOS complex, or alternately SHOS and other nutrients (chemical fertilizing elements), is kept at ambient temperature.

Modifications and/or additions can be made to the method to isolate humic molecules as described heretofore, without departing from the spirit and scope of the invention.

For example, instead of what has been described here, the complex of humic molecules with iron or with other chemical fertilizing elements (nutrients), can be obtained by mixing iron solutions, or other chemical fertilizing elements, directly with the humic molecules without the aid of the exchanger resin. The solution obtained containing the Fe-SHOS complex, or alternately the complex of SHOS and other chemical fertilizing elements, is then filtered.

## Claims

1. Method to isolate water-soluble humic molecules and to obtain complexes thereof with chemical fertilizing elements, comprising the following steps:
- the water-soluble humic fraction is extracted from a sub-stratum rich in organic substance immersed in water;
- the insoluble component is removed from the resultant suspension to obtain the soluble humic fraction alone;
- the humic fraction is purified and concentrated by passing the aqueous extract through a column of suitable resin, to obtain the separation of the humified component alone of the water-soluble organic compounds;
- the humic molecules adsorbed by the column of resin are eluted;
- excess metals such as Na, K, Cd, Pb are removed;
- the pH is corrected to a value near neutral;
- the complex of the water-soluble humic molecule (SHOS) and chemical fertilizing elements is prepared,
**characterized in that** the water in which said sub-stratum rich in organic substance is immersed is non-alkalized water and that said suitable resin used to determine the purification and concentration of the aqueous extract is PVPP resin in acid form (Polyvinylpolypyrrolidone).

2. Method as in claim 1, **characterized in that** the pH of the water used for the first extraction cycle is comprised between about 6 and about 7.8.

3. Method as in claim 1, **characterized in that** said elution step of the humic molecules adsorbed is performed by passing a solution of KOH 0.1N in the column of resin and that said correction of the pH to a value near neutral is performed by progressively adding KOH.

4. Method as in claim 1, **characterized in that** said sub-stratum rich in organic substance is selected from: peat, compost, earth mold, peaty soil, either as a single sub-stratum or as a mixture of several sub-strata.

5. Method as in claim 1, **characterized in that** said immersion in non-alkalized water provides to keep said sub-stratum stirred for a time comprised between 10 and 20 hours according to the type of sub-stratum.

6. Method as in claim 1, **characterized in that** the quantity ratio in weight between the sub-stratum and water is about 1:20.

7. Method as in claim 1, **characterized in that** it provides to previously grind the sub-stratum rich in organic substance (Ø < 2 mm), to increase the active surface thereof.

8. Method as in claim 1, **characterized in that** it provides to use heated water.

9. Method as in claim 1, **characterized in that** the step to remove the insoluble component provides filtration with a suitable means, without applying a vacuum, and subsequent centrifugation at 2000 g for 30 minutes.

10. Method as in claim 1, **characterized in that** after filtration it provides that the sediment, consisting of residues which cannot be dissolved in water such as humic acids, humin or inorganic residues, is removed, while the part which rises to the surface is collected and subjected to further filtration at about 0.2 µm.

11. Method as in claim 10, **characterized in that** for said further filtration at about 0.2 µm it provides to use a packing filter.

12. Method as in claim 10, **characterized in that** for said further filtration at about 0.2 µm it provides to use a tangential filter.

13. Method as in claim 10, **characterized in that** it provides to acidify the filtrate obtained (pH 1÷2) by adding concentrated H₃PO₄ and then the subsequent steps of concentration and purification of the humic fraction extracted.

14. Method as in claim 13, **characterized in that** after concentration and purification, the humic molecules adsorbed are eluted from the column by passing KOH 0.1N to determine an alkalinization of the environment (pH 12÷13), causing the PVPP resin to lose its ability to adsorb the compounds of phenolic nature.

15. Method as in claim 14, **characterized in that** it provides to treat the eluate with Amberlite IR120 resin in acid form until the solution reaches pH values near 2, both to remove the excess K due to the elution of the molecules from the column with KOH, and also to allow a reduction in the endogenous contents of metals naturally adsorbed, complexed and/or chelated in the humic fraction, for example heavy toxic metals such as Cd or Pb.

16. Method as in claim 15, **characterized in that** it provides that, after treatment with Amberlite resin and the correction of the pH of the eluate to values near neutral by adding small quantities of KOH, the extract is frozen and lyophilized.

17. Method as in claim 1, **characterized in that** the preparation of the complex of isolated humic fraction (SHOS) and iron, or alternately other metals and nutrients (chemical fertilizing elements) in general, provides to dissolve said SHOS fraction in water to a final concentration of at least 2g L⁻¹ organic C and subsequently to put the solution containing the SHOS fraction in contact with the Amberlite IR120 resin, pre-treated with iron, or with other nutrients, in a ratio of about 1 ml of solution for 1 ml of resin.

18. Method as in claim 17, **characterized in that** it provides that, after about 3 hours of contact, the solution is separated from the resin by filtration on a suitable means without applying a vacuum, and **in that** the solution containing the Fe-SHOS complex, or alternately SHOS and other nutrients, is kept at ambient temperature.

19. Method as in any claim hereinbefore, **characterized in that** the preparation of the complex of isolated humic fraction (SHOS) with iron, or alternately with other metals and nutrients (chemical fertilizing elements) in general, provides to mix said components directly.

20. Method as in any claim hereinbefore, **characterized in that** the exhausted sub-stratum and the sediment after centrifugation are able to be used again in agricultural processes at least for preparing sub-strata for sowing and growing plants in pots.

21. Method as in any claim hereinbefore, **characterized in that** the non-alkalized water, after the soluble humic fraction has been extracted, is able to be used again in new extraction cycles.
